# EUROPÄISCHE PATENTSCHRIFT

(11) **EP 1 032 620 B1**
(45) Veröffentlichungstag und Bekanntmachung des Hinweises auf die Patenterteilung: **03.03.2004**
(21) Anmeldenummer: 98962357.4
(22) Anmeldetag: 18.11.1998
(51) Int. Cl.: C10L 1/18, C10L 1/02, C10M 145/14, C08F 265/06, C08F 220/18

(54) **ADDITIV FÜR BIODIESEL UND BIOBRENNSTOFFÖLE**
ADDITIVE FOR BIODIESEL AND BIOFUEL OILS
ADDITIF POUR BIODIESELS ET BIOCARBURANTS

(30) Priorität: 21.11.1997 DE 19751501; 14.10.1998 DE 19847423
(43) Veröffentlichungstag der Anmeldung: 06.09.2000
(73) Patentinhaber: RohMax Additives GmbH, 64293 Darmstadt (DE)
(72) Erfinder: AUSCHRA, Clemens, D-78106 Freiburg (DE); VETTER, Joachim, D-76877 Offenbach (DE); BÖHMKE, Uwe, D-64289 Darmstadt (DE); NEUSIUS, Michael, D-64297 Darmstadt (DE)
(86) Internationale Anmeldenummer: PCT/EP1998/007410
(87) Internationale Veröffentlichungsnummer: WO 1999/027037

(56) Entgegenhaltungen:
- EP-A- 0 418 610
- EP-A- 0 436 872
- EP-A- 0 542 111
- EP-A- 0 543 356
- EP-A- 0 570 093
- EP-A- 0 626 442
- EP-A- 0 711 790
- DE-A- 4 040 317
- GB-A- 974 473
- US-A- 3 249 545

## Beschreibung

### Gebiet der Erfindung

Das Interesse der Technik gilt seit geraumer Zeit einerseits alternativen d.h. nicht auf fossilen Vorkommen basierenden Energiequellen, andererseits sogenannten "nachwachsenden Rohstoffen". Dazu gehören insbesondere vegetabilische Öle, d.h. Fettsäureester, in der Regel Triglyceride, die im allgemeinen als biologisch abbaubar und umweltverträglich einzustufen sind. Als Prototyp für derartige Öle kann das Rapsöl/Rüböl gelten. Die Anwendungsempfehlungen für Rüböl als Schmiermittel gehen bis in die zwanziger Jahre zurück (vgl. D. Holde, Chemiker-Zeitung 1922 (1 ), S. 4).

Ausgelöst durch Umweltgesetzgebung, Strukturveränderungen in der Landwirtschaft und allgemeinem Ökotrend gewinnen Pflanzenöle und modifizierte Pflanzenöle wie z. B. Rapsölmethylester (RME) als nachwachsende Rohstoffe zunehmend an Bedeutung als Kraftstoffe und Heizöle. Wichtig für den praktischen Einsatz der Pflanzenölmethylester (PME) ist ihre Fließfähigkeit auch bei tieferen Temperaturen. Ähnlich wie bei konventionellem Dieselkraftstoff kommt es bei Biodiesel bei tiefen Temperaturen zum Auskristallisieren von Kraftstoffanteilen, was die Filtrations- und Fließfähigkeit beeinträchtigt. Unter Biodiesel und Biobrennstoffölen wurden Mischungen aus Dieselölen auf petrochemischer Basis und aus nachwachsenden Rohstoffen verstanden, wobei die Mischungsverhältnisse zwischen petrochemischem Treibstoffanteil und dem Anteil, der durch nachwachsende Rohstoffe dargestellt wird, variieren kann und nicht festgelegt ist. Die Filtrierbarkeit von Dieselkraftstoffen wird üblicherweise durch den CFPP-Wert (Cold Filter Plugging Point, bestimmt nach DIN EN 116) charakterisiert.

### Stand der Technik

Abhängig von der Art des zugrunde liegenden Pflanzenöls und der Qualität der Modifizierung bzw. Aufarbeitung zeigen unadditivierte PME CFPP-Werte typischerweise zwischen 0 °C und -15 °C. Beim Einsatz als Biodiesel wäre somit bei tieferen Temperaturen mit einem Blockieren des Kraftstofffilters zu rechnen. Für Winterdiesel sind z.B. CFPP-Werte kleiner -20 °C vorgeschrieben (DIN EN 590). Herkömmliche Fließverbessereradditive für Dieselkraftstoffe zeigen sich in PME nur beschränkt wirksam und ergeben häufig, wenn überhaupt, nur geringfügige Temperaturerniedrigungen des CFPP.

DE 196 03 696 (Röhm GmbH, 1997-08-07) betrifft Demulgatoren auf der Basis von Polyalkyl(meth)acrylat-Cooligomeren. Die Demulgatoren haben die Aufgabe, Emulsionen zu zerstören. Sie werden eingesetzt, um beispielsweise bei Hydraulikölen Öl von Wasser zu trennen.

FR 2 589 866 (Institut Francais Du Petrole, 1987-05-15) beschreibt Copolymere aus kurzkettigen (C₁-Cᵤ) mittelkettigen (C₈-C₁₄) und langkettigen (C₁₆-C₂₂) Estern der Methacrylsäure und einer vinylaromatischen Komponente.

EP 418 610 (Röhm GmbH) beschreibt zur Verbesserung des Viskositätsindex von Schmierölen geeignete Copolymerisate aus 80 - 99,5 Gew.-Teilen Alkyl(meth)acrylat, die mit einem langkettigen Alkohol verestert sind und 0,5 - 20 Gew.-Teile eines funktionalisierten Alkyl(meth)acrylats, wobei die Veresterung der Methacrylsäure durch einen C₂-C₆-Alkohol oder durch einen mehrfach alkoxylierten Rest erfolgt. Die Copolymerisate weisen gute Scherstabilität und gute Disper- und Detergenzwirkung in Schmierölen auf.

EP 543 356 (Röhm GmbH) beschreibt ein Verfahren zur Herstellung von Zusammensetzungen mit verbesserten Tieftemperaturverhalten zum Einsatz als Kraftstoffe oder zum Einsatz als Schmiermittel auf der Basis von Rübölmethylester. Durch das erfindungsgemäße Verfahren wird ein Gemisch hergestellt, das in der Lage ist, den Couldfilter Plugging Point auf -15°C bis -20°C abzusenken.
Die entstehenden Niederschläge an nicht additivierten langkettigen Fettsäureestern werden abfiltriert.

US-PS 5,578,090 (BRI) beschreibt einen Biodiesel-Additiv, zusammengesetzt aus Fettsäurealkylestern, Glycerinestern und Triglyceriden. Das Additiv ist biologisch abbaubar.

EP 691 355 (Röhm GmbH) beschreibt dispergierwirksame Cooligomere und Copolymere auf der Basis von Estern der Methacrylsäure mit alkoxilierten Alkoholen mit einem bestimmten Gehalt an Ethylenoxid oder Propylenoxid-Einheiten, die sich als ashless dispersants in Schmierölen einsetzen lassen. Die Molekulargewichte der dispergierwirksamen Cooligomere und Copolymere liegen zwischen 1.000 und 300.000 Dalton.

Neben den guten Tieftemperatureigenschaften sind von diesen mit polaren sauerstoffhaltigen Comonomeren modifizierten PAMA auch gute dispergierende Eigenschaften zu erwarten. d.h. es kann eine aktive reinigende Wirkung erwartet werden, die dazu beiträgt, Ablagerungen im Kraftstoffzufuhrsystem (wie z.B. an Einspritzdüsen) zu vermeiden.

DE 39 30 142 und DE 44 23 358 beschreiben vergleichbare sauerstoffhaltige dispergierende PAMA und deren gute Dispergierwirkung als Schmierstoffadditiv bei gleichzeitig hervorragender Verträglichkeit mit Dichtungsmaterialien.
Diese Anmeldungen berücksichtigen nicht die unerwartet gute Wirksamkeit für die Anwendung als Additiv für Biodiesel und Biobrennstofföle.

### Aufgabe und Lösung

Es bestand somit die Aufgabe, Additive zur Verbesserung des Tieftemperaturverhaltens, insbesondere des Cold Filter Plugging Points, von Fettsäureestern einwertiger Alkohole, speziell des Rübölmethylesters, zur Verfügung zu stellen. Anzustreben war z. B. im Falle des Rübölmethylesters die Herabsetzung des CFPP von -15 °C auf -22 °C.

Es bestand somit ferner die Aufgabe, ein wirkungsvolles Additiv zur Beherrschung des CFPP von RME zu entwickeln. Insbesondere sollte eine sichere Einstellung von CFPP-Werten ≤ -20 °C bei ökonomischen Additivzugabemengen von typischerweise ≤ 1 Gew.-% erreicht werden. Weitere für das Tieftemperaturfließverhalten wichtige Eigenschaften wie Pour Point (ASTM-D-92) und Festpunkt (gemessen nach Herzog MC 852) sollten durch das Additiv ebenfalls günstig beeinflußt werden.

Im Rahmen der Erfindung bestand ferner die Aufgabe, Mischungen aus den erfindungsgemäßen Polymeren und Copolymeren mit Biodieseln bereitzustellen, die sich für den Einsatz bei niedrigen Temperaturen eignen.

Die Technik verwendet seit längerer Zeit zur Herabsetzung des Pour Point von Schmierölen und anderen Mineralölprodukten polymere Verbindungen, sogenannte "Pour Point Depressants", die als gemeinsames Strukturmerkmal eine Vielzahl von Alkylseitenketten mit in der Regel 8 - 40, insbesondere 10 - 28 Kohlenstoffatomen aufweisen. Einen besonderen Rang nehmen dabei Poly(meth)acrylsäureester von langkettigen Alkoholen (PAMA-Additive) ein.

Die Aufgabe wird gelöst durch ein Copolymer gemäß den Merkmalen des Anspruch 1.

Es wurde gefunden, daß bestimmte, mit sauerstoffhaltigen polaren Gruppen funktionalisierte PAMA unerwartet gute CFPP-verbessernde Wirksamkeit aufweisen. Dabei handelt es sich um PAMA mit hydroxylgruppenhaltigen und/oder ethergruppenhaltigen Comonomeren wie z.B. 2-Hydroxyethylmethacrylat, Hydroxypropylmethacrylat, 2-[2-(2-Ethoxyethoxy)ethoxy]ethylmethacrylat, 2-Ethoxyethylmethacrylat, 2-Methoxyethylmethacrylat, Methacrylsäureester von ethoxyliertem Tridecylalkohol (Oxoalkohol C13 + 20 C6) z.B. MARLIPAL 013/200 (Hüls), Methacrylsäureester von Methoxypolyethylenglykol wie z.B. Carbowax 350 oder Carbowax 750 (Union Carbide), sowie die entsprechenden Acrylatester wie z.B. 2-Hydroxyethylacrylat, 2-Hydroxypropylacrylat.

Beste Wirksamkeit ergab sich mit hydroxylgruppenhaltigen Monomeren wie 2-Hydroxyethylmethacrylat. Diese Additive zeigen darüber hinaus auch gute Wirksamkeit bezüglich Pour Point und Festpunkt.

Die Herstellung der erfindungsgemäß einsetzbaren Polymere kann mit allen an sich bekannten Polymerisationsmethoden erfolgen.

### Ausführung der Erfindung

### BEISPIELE

Die folgenden Beispiele beschreiben die Durchführung der Erfindung.

### 1. verwendete Materialien:

- AMA-I =: Methacrylat von Dobanol 25L (Shell): (Gemisch isomerer C12 bis C15-Alkohole mit ca. 80 % n-Anteil)
- AMA-II =: Methacrylat von Talgfettalkohol: (Gemisch aus n-C16 und n-C18-Alkoholen)
- AMA-III =: Isodecylmethacrylat
- HEMA =: 2-Hydroxyethylmethacrylat
- HPMA =: 2-Hydroxypropylmethacrylat
- EOMA =: Methacrylat von ethoxyliertem Isotridecylalkohol mit mittlerem Ethoxylierungsgrad = 20
- ETGMA =: Ethyltriglykolmethacrylat
- IN-1 =: tert.-Butylperpivalat (75 %ige Lösung in Kohlenwasserstoff)
- IN-2 =: tert.-Butylperisononanoat
- IN-3 =: tert.-Butylperoctoat
- DDM =: Dodecylmercaptan
- Shell Fluid 2613 =: Kohlenwasserstoffgemisch (kinematische Viskosität bei 40 °C = 5,1 mm²/s)
- DIOA =: Vestinol OA = Di-2-ethylhexyladipat
- RME =: Rapsmethylester
- ALK-1 =: C12 bis C15-Alkohol Lial 125 = Handelsproduktvon Enichem Augusta
- RME1-3 =: sind unterschiedliche Rapsöle, die auf dem Markt verfügbar sind. Sie unterscheiden sich in ihren Eigenschaften im Rahmen der für biologische Produkte üblichen Schwankungsbreiten.

### 2. Allgemeine Vorschrift zur Herstellung eines 70 %igen Additivs:

In einem 2-Liter Dreihalskolben mit Ölbadheizung, Säbelrührer, Rückflußkühler, Innenthermometer und N₂-Durchleitung wird eine Reaktionsmischung vorgelegt, bestehend aus:

| | |
|---|---|
| 700,00 g | Monomermischung (Zusammensetzung s. Tab. 1) |
| 77,78 g | Lösungsmittel A (s. Tab. 1) |
| X g | DDM (s. Tab. 1) |

Diese Mischung wird unter Zusatz von ca. 10 g Trockeneis zum Inertisieren und zusätzlich unter N₂ auf 75 °C erwärmt und anschließend wird eine Mischung von 1,4 g IN-1 und 1,4 g IN-2 zugesetzt. Nach Überschreiten eines Temperaturmaximums von ca. 120 °C wird der Ansatz weiter bei 120 °C gehalten. Vier Stunden und sechs Stunden nach der ersten Initiatorzugabe werden nochmals jeweils 1,4 g IN-2 zugegeben und noch weitere 4 Stunden bei 120 °C gehalten. Danach wird mit
222,22 g eines Lösungsmittels B verdünnt. (Hierbei kann es sich auch um ein Gemisch verschiedener Lösungsmittel handeln).

Zur Verwendung als Lösungsmittel A oder Lösungsmittel B kommen alle bekannten mineralölbasierenden Öltypen (paraffinisch, naphtenisch, aromatisch) und auch Syntheseflüssigkeiten (Esteröle, PAO, Alkohole) sowie auch natürliche Öle wie z.B. Rapsöl oder PME sowie deren Mischungen in Frage. Es werden klare viskose Additivkonzentrate erhalten. Tabelle 1 gibt die Zusammensetzung und die Charakterisierung der hergestellten Beispiele.

Mischungen der Copolymeren der vorliegenden Anmeldung können paraffinische Mineralöle oder naphtenische Mineralöle oder aromatische Mineralöle oder Esteröle oder modifizierte oder unmodifizierte Bioöle oder natürliche pflanzliche oder tierische Öle oder Mischungen vorstehend genannter Öle enthalten.

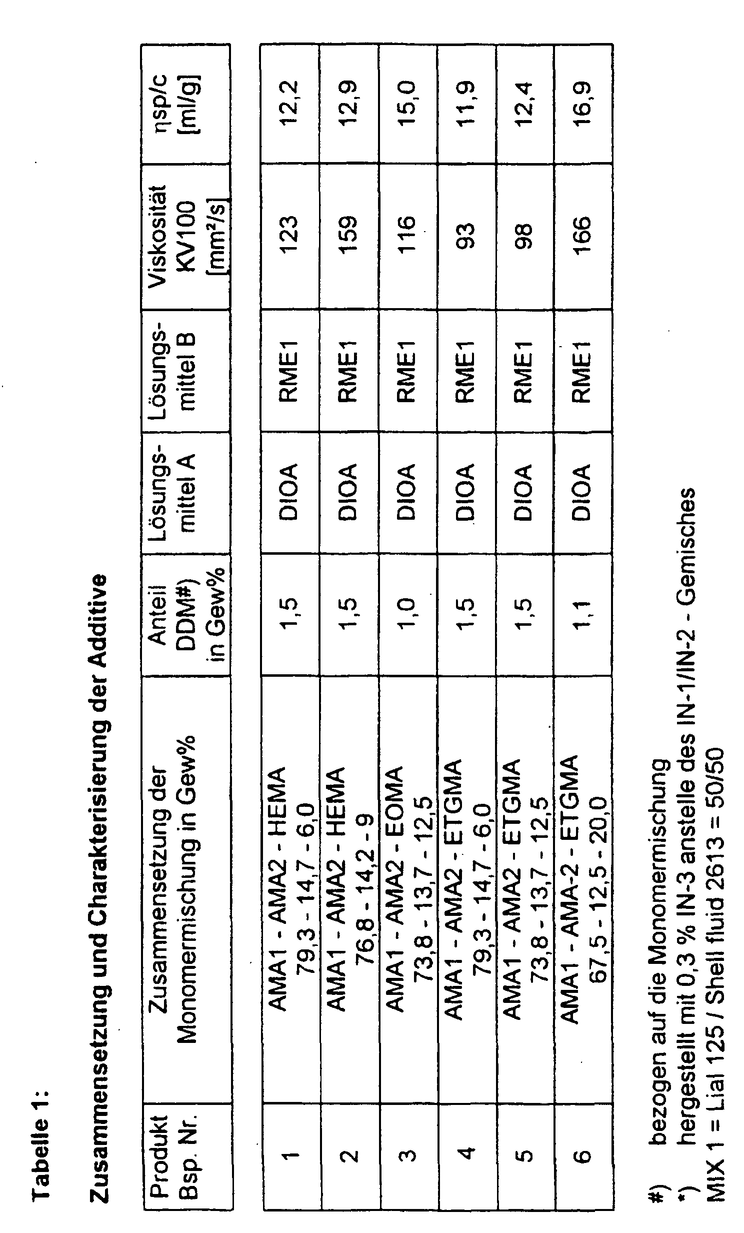

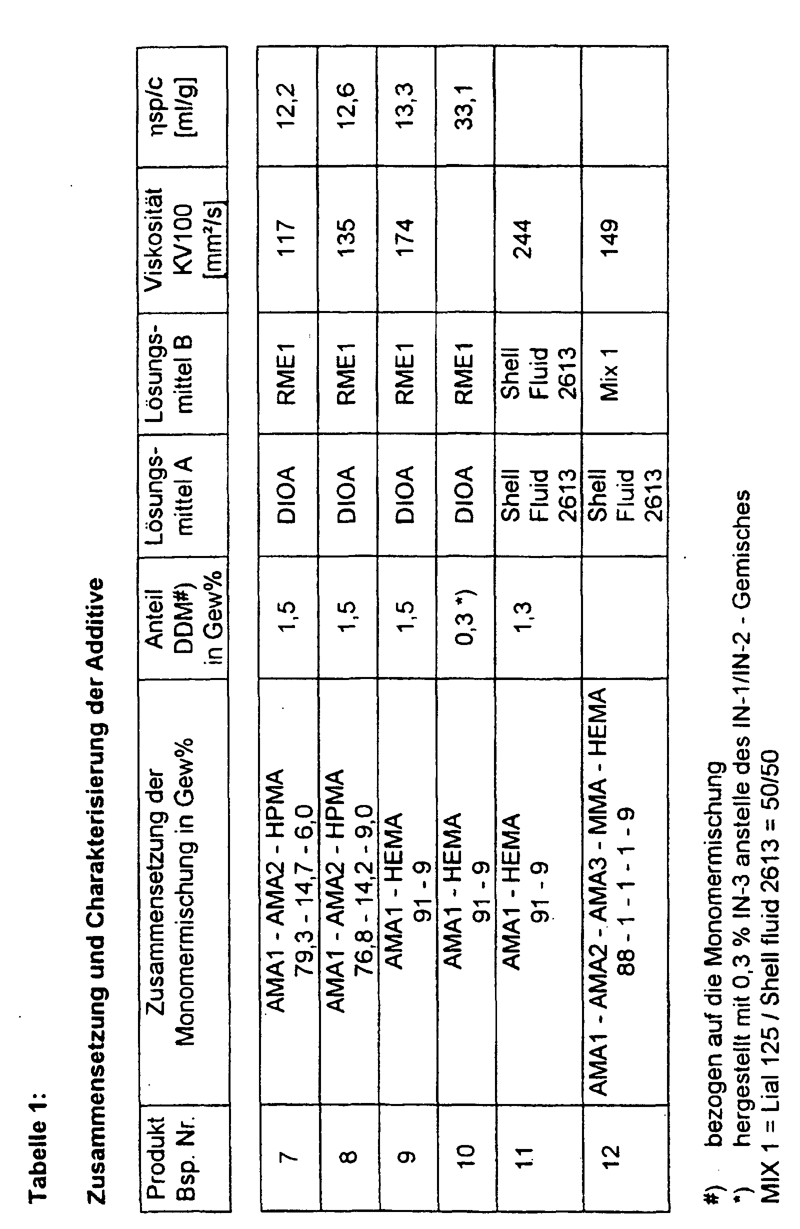

Aufgrund der niedrigen aktuellen Viskosität KV100 sind diese Additive auch sehr gut zu verarbeiten. Die spezifische Viskosität η sp/c gibt ein Maß für das Molekulargewicht der verschiedenen Additive.

Tabelle 2 bis 4 zeigt die Wirksamkeit der neuen Additive in verschiedenen marktüblichen RME-Sorten im Vergleich jeweils auch die Wirksamkeit eines gängigen PAMA-Additives VISCOPLEX 10-310 (RohMax GmbH) des Standes der Technik. Mit den neuen sauerstoffhaltigen Additiven können in den verschiedenen RME-Qualitäten problemlos CFPP-Werte ≤ -20 °C erreicht werden. Gleichzeitig ergeben sich gute Werte bei Pour Point und Festpunkt.

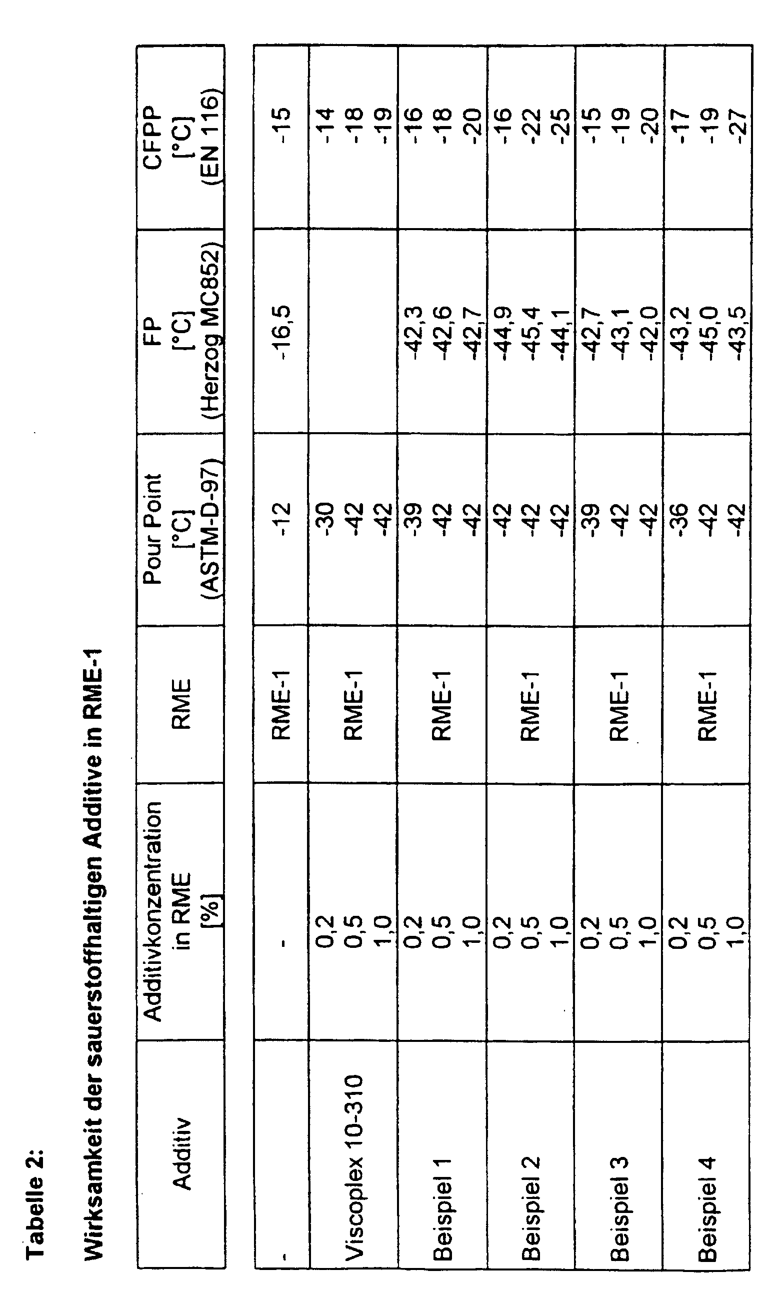

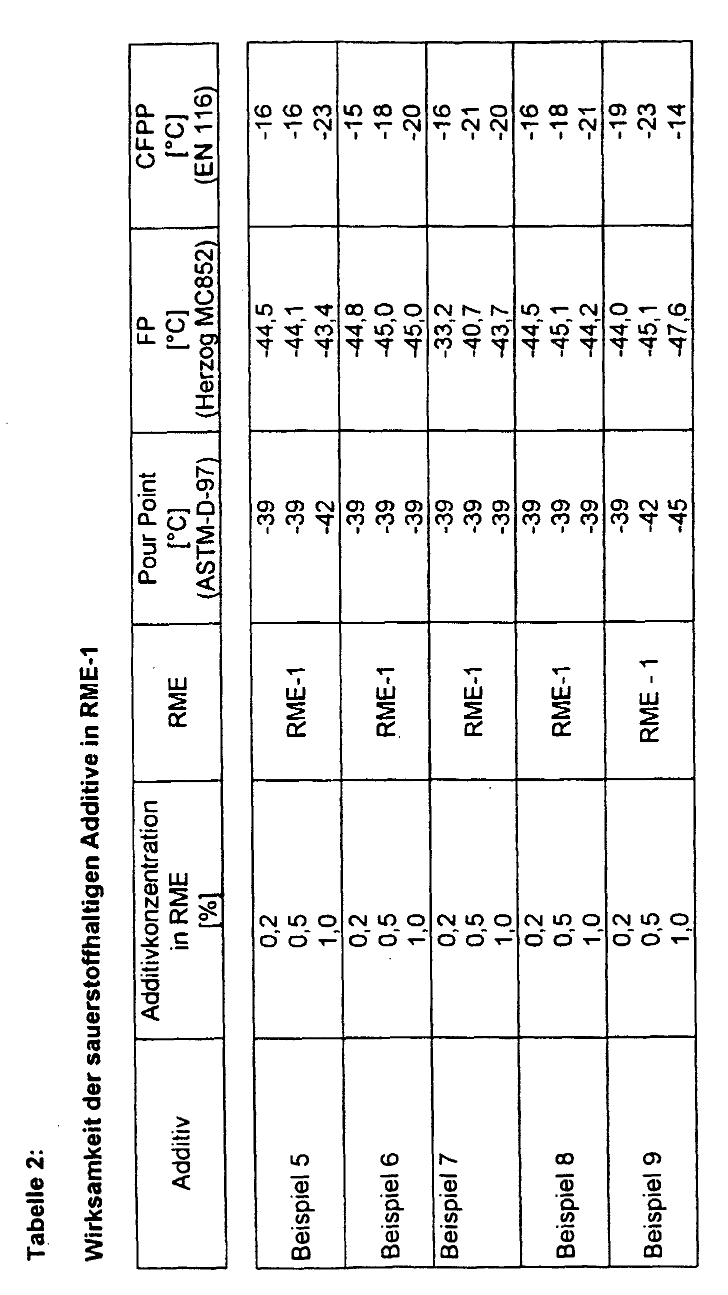

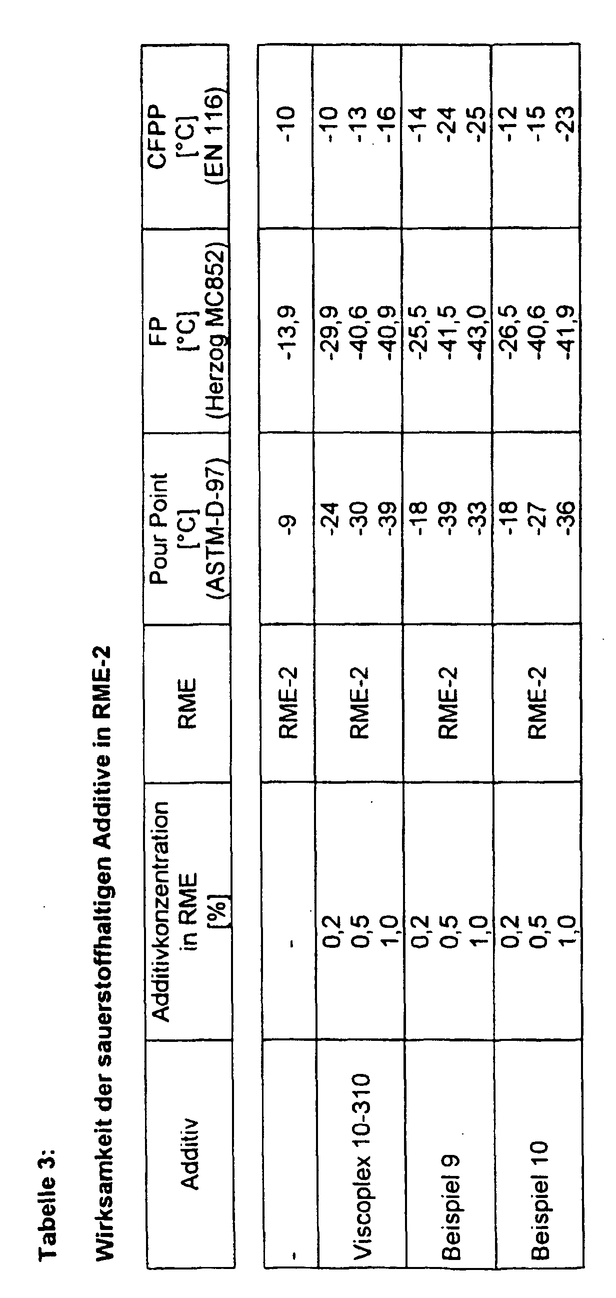

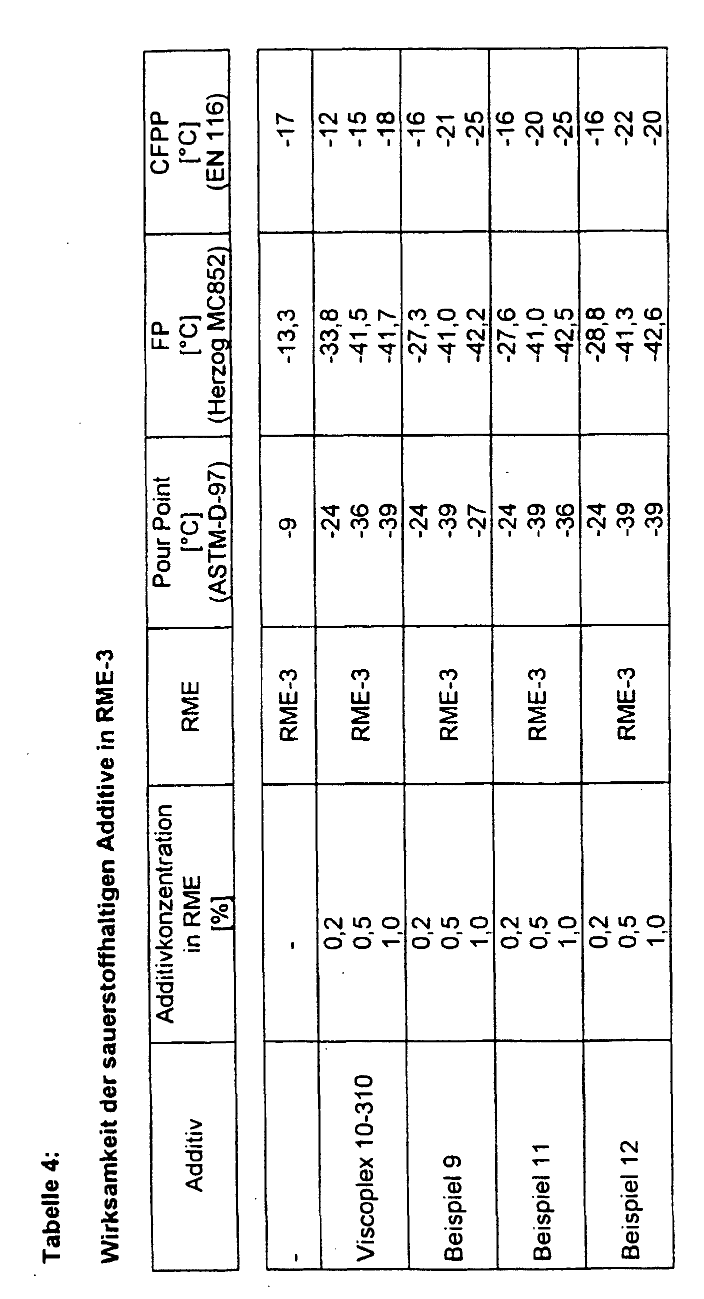

## Patentansprüche

1. Biodiesel, enthaltend Copolymere , bestehend aus folgenden Monomerkomponenten:
a) 48 - 98 Gew.-% von Verbindungen der Formel I 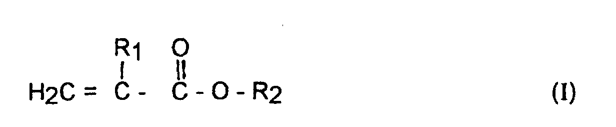 wobei gilt:
R₁ = H oder CH₃
R₂ = Alkylrest mit einer Kettenlänge von 8 - 30, der auch verzweigt sein kann.
b) 2 - 30 Gew.-% einer oder mehrerer sauerstoffhaltiger Verbindungen der Formel II 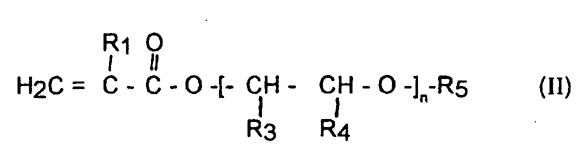 wobei gilt:
R₁ = hat die gleichen Bedeutungen wie in Formel I
R₃ = H oder CH₃
R₄ = H oder CH₃
R₅ = kann H oder eine Alkylgruppe mit 1 - 20 Kohlenstoffatomen bedeuten, wobei der Rest auch verzweigt sein kann, oder eine durch ein oder mehrere Arylgruppen substituierte Alkylgruppe mit 1 - 20 Kohlenstoffatomen.
n = liegt zwischen 1 und 30
sowie
c) 0 - 30 Gew.-% eines Methacrylats der Formel III 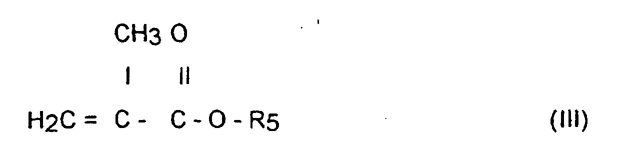
wobei gilt:
R₅ = C₁ - C₄ Alkyl
oder Styrol,
wobei die Mengen a) - c) sich zu 100 Gew.-% ergänzen und die Copolymere in Mengen von 0,005 Gew.-% bis 5 Gew.-% enthalten sind.

2. Biodiesel nach Anspruch 1,
**dadurch gekennzeichnet,**
**daß** das Monomer b) Hydroxyethylmethacrylat ist.

3. Biodiesel nach Anspruch 1,
**dadurch gekennzeichnet,**
**daß** das Monomer b) Hydroxypropylmethacrylat ist.

4. Biodiesel nach Anspruch 1,
**dadurch gekennzeichnet,**
**daß** das mittlere Molekulargewicht der Copolymeren zwischen 3.000 und 1.000.000 liegt.

5. Biodiesel nach Anspruch 1,
**dadurch gekennzeichnet,**
**daß** das funktionelle Comonomer 1 b ganz oder teilweise auf das vorgebildete PAMA-Polymer gepfropft vorliegt.

6. Biodiesel nach Anspruch 5,
**dadurch gekennzeichnet,**
**daß** für R₂ in Formel I gilt:
R₂ ist ein verzweigter oder unverzweigter Alkohol mit einer Kettenlänge zwischen 10 und 20 Kohlenstoffatomen.

7. Biodiesel, enthaltend Mischungen aus den Copolymeren gemäß einem der Ansprüche 1 bis 6 und paraffinischen Mineralölen oder naphtenischen Mineralölen oder aromatischen Mineralölen oder Esterölen oder modifizierten oder unmodifizierten Bioölen oder natürlichen pflanzlichen oder tierischen Ölen oder aus Mischungen vorstehend genannter Öle.

8. Kraftstoffe oder Brennstoffe, bestehend aus Mischung aus konventionellen mineralölischen Kraftstoffen oder Brennstoffen mit Biodiesel gemäß einem der Ansprüche 1-6, wobei der Anteil an Biodiesel zwischen 5 Gew.-% und 100 Gew.-% liegt und die Mischung die Copolymere in Mengen zwischen 0,005 Gew.-% und 5 Gew.-% enthält.

9. Verwendung der Copolymere bestehend aus folgenden Monomerkomponenten:
a) 48 - 98 Gew.-% von Verbindungen der Formel I 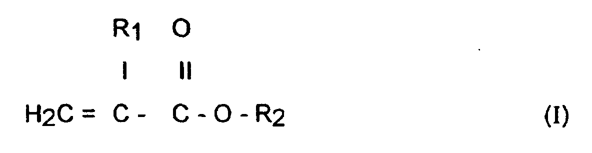 wobei gilt:
R₁ = H oder CH₃
R₂ = Alkylrest mit einer Kettenlänge von 8-30, der auch verzweigt sein kann.
b) 2 - 30 Gew.-% einer oder mehrerer sauerstoffhaltiger Verbindungen der Formel II 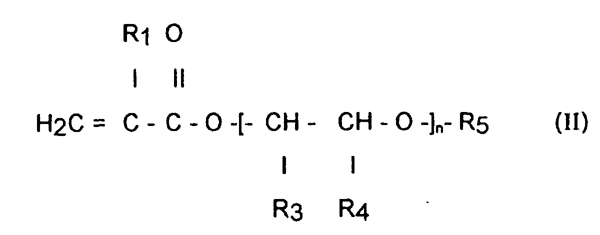 wobei gilt:
R₁ = hat die gleichen Bedeutungen wie in Formel I
R₃ = H oder CH₃
R₄ = H oder CH₃
R₅ = kann H oder eine Alkylgruppe mit 1 - 20 Kohlenstoffatomen bedeuten, wobei der Rest auch verzweigt sein kann, oder eine durch ein oder mehrere Alkylgruppen substituierte Alkylgruppe mit 1 - 20 Kohlenstoffatomen.
n = liegt zwischen 1 und 30
sowie
c) 0 - 30 Gew.-% eines Methacrylats der Formel III 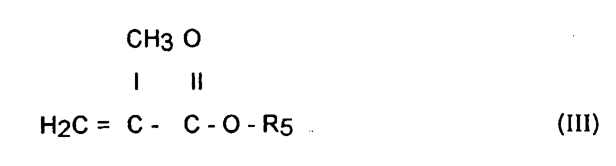
wobei gilt:
R5 = C₁ - C₄ Alkyl
oder Styrol,
wobei die Mengen a) - c) sich zu 100 Gew.-% ergänzen.
zur Verbesserung des Tieftemperaturfließverhaltens und des CFPP von Biodieseln und Biobrennstoffen.

## Claims

1. Biodiesel containing copolymers consisting of the following monomer components:
a) 48 - 98 wt.% of compounds of formula 1 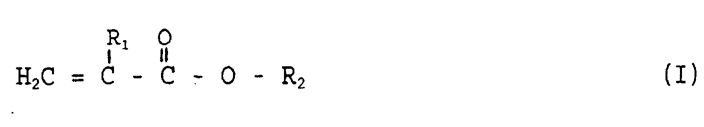 wherein:
R₁ = H or CH₃
R₂ = an alkyl group having a chain length of 8 to 30, which may also be branched;
b) 2 - 30 wt.% of one or more oxygen-containing compounds of formula II 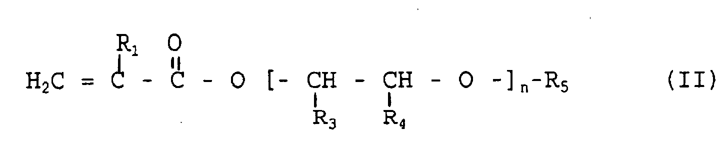 wherein:
R₁ has the same meanings as in formula I
R₃ = H or CH₃
R₄ = H or CH₃
R₅ may represent H or an alkyl group having 1-20 carbon atoms, while the group may also be branched, or an alkyl group having 1-20 carbon atoms Which is substituted by one or more aryl groups;
n is between 1 and 30
and
c) 0 - 30 wt.% of a methacrylate of formula III 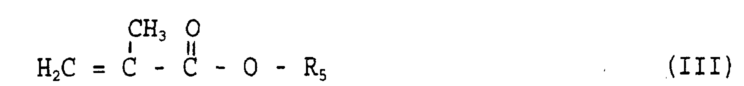
wherein:
R₅ = C₁-C₄ alkyl
or styrene,
the amounts a)-c) adding up to 100 wt.% and the copolymers being present in amounts from 0.005 wt.% to 5 wt.%.

2. Biodiesel according to claim 1, **characterised in that** the monomer b) is hydroxyethyl methacrylate.

3. Biodiesel according to claim 1, **characterised in that** the monomer b) is hydroxypropyl methacrylate.

4. Biodiesel according to claim 1, **characterised in that** the average molecular weight of the copolymers is between 3,000 and 1,000,000.

5. Biodiesel according to claim 1, **characterised in that** the functional comonomer 1b is present wholly,or partially grafted onto the PAMA polymer previously formed.

6. Biodiesel according to claim 5, **characterised in that** R₂ in formula I has the following meaning:
R₂ is a branched or unbranched alcohol having a chain length of between 10 and 20 carbon atoms.

7. Biodiesel containing mixtures of the copolymers according to one of claims 1 to 6 and paraffinic mineral oils or naphthenic mineral oils or aromatic mineral oils or ester oils or modified or unmodified bio-oils or natural vegetable or animal oils or mixtures of the above-mentioned oils.

8. Propellants or fuels consisting of a mixture of conventional mineral-oil propellants or fuels with biodiesel according to one of claims 1 to 6,'wherein the proportion of biodiesel is between 5 wt.% and 100 wt.% and the mixture contains the copolymers in amounts of between 0.005 wt.% and 5 wt.%.

9. Use of the copolymers consisting of the following monomer components:
a) 48 - 98 wt.% of compounds of Formula I 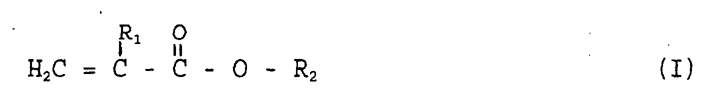 wherein:
R₁ = H or CH₃
R₂ = an alkyl group having a chain length of 8-30, which may also be branched;
b) 2 - 30 wt.% of one or more oxygen-containing compounds of formula II 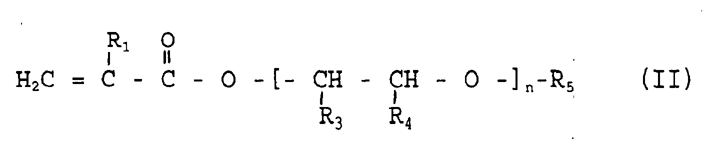 wherein:
R₁ has the same meanings as in formula I
R₃ = H or CH₃
R₄ = H or CH₃
R₅ may represent H or an alkyl group having 1-20 carbon atoms, while the group may also be , branched, or an alkyl group having 1-20 carbon atoms which is substituted by one or more alkyl groups;
n is between 1 and 30
and
c) 0 - 30 wt.% of a methacrylate of formula III 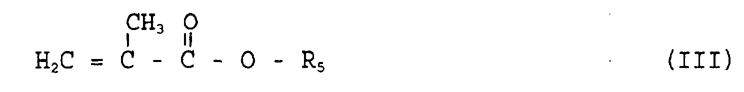
wherein:
R₅ = C₁-C₄ alkyl
or styrene,
wherein the amounts a)-c) add up to 100 wt.%,
for improving the low temperature flow characteristics and CFPP of biodiesels and biofuels.

## Revendications

1. Biodiésel contenant des copolymères, qui consiste en les composants monomères suivants :
a) de 48 à 98 % en poids de composés de formule J 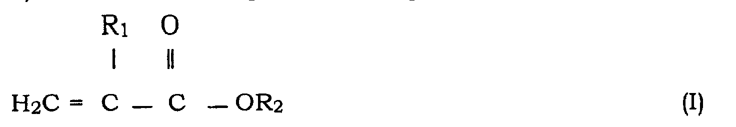 pour laquelle on a :
R₁ = H ou CH₃
R₂ = un reste alkyle ayant une longueur de chaîne de 8 à 30, qui peut également être ramifiée,
b) de 2 à 30 % en poids d'un ou plusieurs composants contenant de l'oxygène de formule II 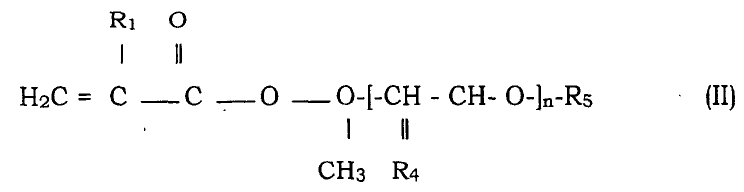 pour laquelle on a :
R₁ = a les mêmes significations que dans la formule I
R₃ = H ou CH₃
R₄ = H ou CH₃
R₅ = peut signifier H ou un groupe alkyle ayant de 1 à 20 atomes de carbone, pour lequel le reste peut être également ramifié ou un groupe alkyle substitué par un ou plusieurs groupes aryle, ayant de 1 à 20 atomes de carbone,
n = se situe entre 1 et 30
ainsi que
c) de 0 à 30 % en poids d'un méthacrylate de formule III 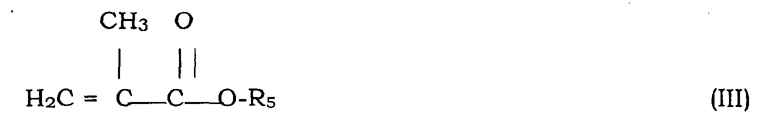 pour laquelle il y a :
R₅ = alkyle en C₁-C₅,
ou du styrène,
a)-c) se complétant à 100 % en poids et les copolymères présents en quantités allant de 0,005 % en poids à 5 % en poids.

2. Biodiésel selon la revendication 1,
**caractérisé en ce que**
le monomère b) est du méthacrylate d'hydroxyéthyle.

3. Biodiésel selon la revendication 1,
**caractérisé en ce que**
le monomère b) est du méthacrylate d'hydroxypropyle.

4. Biodiésel selon la revendication 1,
**caractérisé en ce que**
le poids moléculaire moyen des copolymères se situe entre 3.000 et 1.000.000.

5. Biodiésel selon la revendication 1,
**caractérisé en ce que**
le comonomère fonctionnel (b) se présente totalement ou partiellement greffé sur le polymère de PAMA préformé.

6. Biodiésel selon la revendication 5,
**caractérisé en ce que**
pour R₂ dans la formule I, il y a :
R₂ est un alcool ramifié ou non ramifié ayant une longueur de chaîne comprise entre 10 et 20 atomes de carbone.

7. Biodiésel contenant des mélanges à base des copolymères conformément à l'une des revendications 1 à 6 et des huiles minérales paraffiniques ou des huiles minérales naphténiques ou des huiles minérales aromatiques, ou des huiles estérifiées ou des huiles biologiques modifiées ou non modifiées ou des huiles végétales ou animales naturelles ou des mélanges d'huiles citées précédemment.

8. Carburants ou combustibles consistant en un mélange à base de carburants ou de combustibles à base d'huiles minérales conventionnels, avec un biodiésel conformément à l'une des revendications 1 à 6, pour lesquels la proportion de biodiésel se situe entre 5 % en poids et 100 % en poids, et le mélange renferme les copolymères en quantités comprises entre 0,005 % en poids et 5 % en poids.

9. Utilisation des copolymères qui sont formés des composants monomères suivants :
a) de 48 à 98 % en poids de composés de formule 1 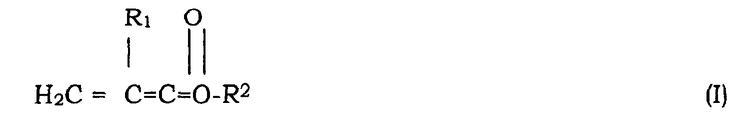 pour laquelle il y a
R₁ = H ou CH₃
R₂ = reste alkyle ayant une longueur de chaîne de 8 à 30, qui peut également être ramifié
b) de 2 à 30 % en poids d'un ou plusieurs composés contenant de l'oxygène de formule II 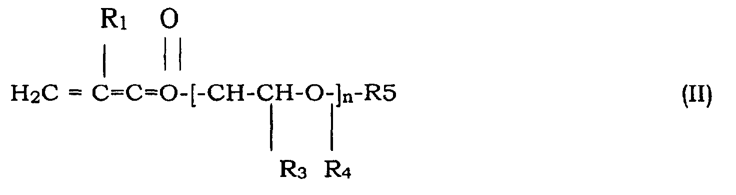 pour laquelle il y a :
R₁ = a les mêmes significations que dans la formule I
R₃ = H ou CH₃
R₄ = H ou CH₃
R₅ = peut signifier H ou un groupe alkyle ayant de 1 à 20 atomes de carbone, pour lequel le reste peut également être ramifié, ou un groupe alkyle substitué par un ou plusieurs groupes alkyle ayant de 1 à 20 atomes de carbone
n = se situe entre 1 et 30
ainsi que
c) de 0 à 30 % en poids d'un méthacrylate de formule III 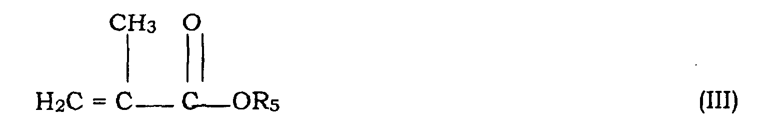 pour laquelle on a :
R₅ = alkyle en C₁-C₅,
ou du styrène
pour lequel les quantités de a)-c) se complètent à 100 % en poids en vue de l'amélioration du comportement à l'écoulement aux basses températures et du CFPP (Cold Filter Plugging Point) des biodiésels et des bio-carburants.
